# EUROPÄISCHE PATENTSCHRIFT

(11) **EP 2 996 313 B1**
(45) Veröffentlichungstag und Bekanntmachung des Hinweises auf die Patenterteilung: **02.01.2019**
(21) Anmeldenummer: 15002480.0
(22) Anmeldetag: 21.08.2015
(51) Int. Cl.: H04M 1/60, H04M 9/08, G10L 21/02, G10L 25/18

(54) **KOMMUNIKATIONSANLAGE FÜR KRAFTFAHRZEUGE**
COMMUNICATION SYSTEM FOR MOTOR VEHICLES
INSTALLATION DE COMMUNICATION POUR VEHICULES AUTOMOBILES

(30) Priorität: 12.09.2014 DE 102014013524
(43) Veröffentlichungstag der Anmeldung: 16.03.2016
(73) Patentinhaber: paragon AG, 33129 Delbrück (DE)
(72) Erfinder: KRINI, Mohamed, 33161 Hövelhof (DE); RODEMER, Klaus, 36369 Lautertal (DE)
(74) Vertreter: Lelgemann, Karl-Heinz

(56) Entgegenhaltungen:
- EP-A1- 2 562 751
- US-A1- 2002 037 755
- US-A1- 2008 273 714
- US-A1- 2011 216 913

## Beschreibung

Die Erfindung bezieht sich auf eine Kommunikationsanlage für Kraftfahrzeuge, mit einer Mehrplatzfreisprechanlage, mittels der für jeden Fahrzeuginsassen an dessen Fahrzeugsitz eine Telefonie-Freisprechfunktionalität realisierbar ist, einer Innenraumkommunikationsanlage, mittels der eine Kommunikation für voneinander entfernt im Fahrzeuginnenraum befindliche Fahrzeuginsassen realisierbar ist, Mikrofonanordnungen, die an die Mehrplatzfreisprechanlage und die Innenraumkommunikationsanlage angeschlossen sind, wobei jedem Fahrzeugsitz bzw. jedem Fahrzeuginsassen eine Mikrofonanordnung zugeordnet ist, und Lautsprecheranordnungen, die an die Mehrplatzfreisprechanlage und die Innenraumkommunikationsanlage angeschlossen sind, wobei jedem Fahrzeugsitz bzw. Fahrzeuginsassen eine Lautsprecheranordnung zugeordnet ist.

Im fahrenden Kraftfahrzeug gestaltet sich die Kommunikation aufgrund des üblicherweise vorherrschenden vergleichsweise hohen Geräuschpegels zumeist als schwierig. Besonders trifft dies zu, wenn die vorderen Fahrzeuginsassen mit den hinteren Fahrzeuginsassen kommunizieren möchten. Für eine verbesserte Verständigung verringern die Gesprächspartner zumeist den Abstand zueinander, z.B. dadurch, dass sich vorne sitzende Fahrzeuginsassen nach hinten drehen bzw. hinten sitzende Fahrzeuginsassen nach vorne beugen, und dadurch, dass gleichzeitig die Sprechlautstärke erhöht wird. Dies ist für längere Gespräche anstrengend und ermüdend.

Durch bekannte Innenraumkommunikationsanlagen wird versucht, die Kommunikation zwischen den vorderen und den hinteren Fahrzeuginsassen zu verbessern. Hierbei wird zunächst das Gesprochene des jeweils sprechenden Fahrzeuginsassen mit einem oder mehreren Mikrofonen aufgezeichnet und anschließend über die Lautsprecher wiedergegeben, die sich in der Nähe der übrigen Fahrzeuginsassen befinden. Durch eine geeignete Signalverarbeitung zwischen der Aufnahme und der Wiedergabe des Gesprochenen wird erreicht, dass eine solche Innenraumkommunikationsanlage nicht aufgrund etwaiger akustischer Rückkopplungen instabil wird und dass die visuellen und akustischen Sinneseindrücke weiterhin übereinstimmen.

Telefonate während der Fahrt werden heute üblicherweise über Freisprecheinrichtungen geführt. Dabei nehmen entsprechende Freisprecheinrichtungen und Sprachdialogeinheiten, die im Kraftfahrzeug betrieben werden, neben dem Sprachsignal des jeweiligen Gesprächsteilnehmers bzw. des Benutzers eines Spracherkennungssystems auch unerwünschte Störungskomponenten, wie Hintergrundgeräusche, Abrollgeräusche, Störungssprecher etc., auf. Um die Sprachqualität bzw. die Erkennungsleistung zu verbessern, werden geeignete Verfahren zur Sprachsignalverbesserung in einem Sendepfad einer derartigen für mehrere Fahrzeuginsassen bzw. Fahrzeugsitze ausgestalteten Mehrplatzfreisprechanlage eingesetzt, d.h. in der Kommunikationsrichtung vom Kraftfahrzeug zur fernen Gegenstelle. Hierbei werden als gebräuchliche Verfahren üblicherweise eine Echokompensation und eine Geräuschreduktion realisiert. Auch im Empfangspfad, d.h. bei der Kommunikationsrichtung von der fernen Gegenstelle zum Fahrzeug, werden aufwändige Verfahren eingesetzt, um die Sprachqualität und die Verständlichkeit der Signale über die Lautsprecher zu verbessern. Beispielsweise kann hier eine Bandbreitenerweiterung und eine geräuschabhängige Verstärkungsregelung vorgesehen sein.

Wenn zur Realisierung einer Mehrplatztelefonie eine Mehrplatzfreisprechanlage, mittels der alle Fahrzeuginsassen mit einer Freisprechfunktionalität ausgestattet werden, und eine Innenraumkommunikationsanlage gleichzeitig unterstützt werden sollen, so entsteht eine hohe Datentransferrate und es wird eine hohe Rechnerleistung benötigt.

Bei einem Kraftfahrzeug wird eine Vielzahl von Mikrofonen bzw. Mikrofongruppen sowie Lautsprechern vorgesehen, die der Mehrplatzfreisprechanlage bzw. der Innenraumkommunikationsanlage zugeordnet sind. Bei vier Kraftfahrzeugsitzen, denen jeweils drei Mikrofone zugeordnet sind, wobei eine Abtastfrequenz von 22 kHz und eine Wortbreite von 16 Bit vorgesehen ist, entsteht entsprechend ein Datenvolumen von ca. 500 kByte/s. Mit zunehmender Anzahl der Fahrzeugsitze steigt die benötigte Rechenleistung signifikant. Bei aus dem Stand der Technik bekannten Realisierungen derartiger Kommunikationsanlagen werden wenige Mikrofone, zumeist zwei Mikrofone, eingesetzt, so dass lediglich der Fahrer und der Beifahrer mit einer Freisprechfunktionalität ausgestattet werden. Auch hinsichtlich der Innenraumkommunikationsanlage stößt man hier an Grenzen, falls alle Fahrzeugsitze mit der an sich erforderlichen Anzahl von Mikrofonen bzw. Mikrofonanordnungen ausgestattet werden.

Die Rechenleistungen für die Mehrplatzfreisprechanlage und die Innenraumkommunikationsanlage finden hier auf einer zentralen Einheit, z.B. der Head-Unit, des Kraftfahrzeugs statt.

Eine beispielhafte Kommunikationsanlage für Kraftfahrzeuge wird in der US 2008/0273714 A1 beschrieben.

Ausgehend von dem vorstehend geschilderten Stand der Technik liegt der Erfindung die Aufgabe zugrunde, eine Kommunikationsanlage für Kraftfahrzeuge zur Verfügung zu stellen, bei der die erforderliche Datentransferrate und die notwendige Rechenleistung erheblich reduziert ist.

Diese Aufgabe wird erfindungsgemäß dadurch gelöst, dass die Mehrplatzfreisprechanlage eine Zentraleinheit und für jeden Fahrzeugsitz eine Freisprechteileinheit aufweist, mittels der aus den von der ihr zugeordneten Mikrofonanordnung erfassten Signalen ein Ausgangssignal auswähl- oder generierbar und an die Zentraleinheit der Mehrplatzfreisprechanlage und an die Innenraumkommunikationsanlage weiterleitbar ist. Erfindungsgemäß werden für alle im Kraftfahrzeug vorgesehenen Fahrzeugsitze individuelle Freisprechteileinheiten eingesetzt, wobei jede Freisprechteileinheit einen Teil der für die Freisprechfunktionalität erforderlichen Rechenleistung stellt. Hierdurch kann zum einen die in der Zentraleinheit zu realisierende Rechnerleistung erheblich reduziert werden, wobei darüber hinaus die Datentransfernrate spürbar verringert wird. Gemäß einer vorteilhaften Weiterbildung der erfindungsgemäßen Kommunikationsanlage für Kraftfahrzeuge ist ein in der Zentraleinheit der Mehrplatzfreisprechanlage von einer kraftfahrzeugexternen Gegenstelle empfangenes Telefonsignal in der Zentraleinheit zu einem Ausgangssignal verarbeit- und als solches an die Lautsprecheranordnung weiterleitbar, die dem von der Gegenstelle angewählten Fahrzeuginsassen zugeordnet ist. Hierdurch können die von der Zentraleinheit zu den Freisprechteileinheiten zu übertragenden Daten reduziert werden.

Für die akustische Qualität der Sprechsignale hat sich eine Mikrofonanordnung je Fahrzeugsitz als vorteilhaft erwiesen, die zumindest ein, vorzugsweise drei in einen Sicherheitsgurt integrierte Mikrofone und zumindest ein weiteres, im Bereich des jeweiligen Fahrzeugsitzes geeignet angeordnetes, z.B. an einer dem Fahrzeugsitz zugeordneten Dachbedieneinheit, einem Rückspiegel od.dgl., montiertes Mikrofon aufweist.

Die Zentraleinheit der Mehrplatzfreisprechanlage lässt sich vorteilhaft in einen Zentralrechner bzw. eine Head-Unit des Kraftfahrzeugs integrieren.

Entsprechend kann auch die Innenraumkommunikationsanlage in den Zentralrechner bzw. in der Head-Unit des Kraftfahrzeugs integriert sein.

Gemäß einer vorteilhaften Weiterbildung der erfindungsgemäßen Kommunikationsanlage für Kraftfahrzeuge weist jede Freisprechteileinheit eine der Mikrofonanordnung zugeordnete Analysefilterbank und eine einem Referenzsignal zugeordnete Analysefilterbank auf, der eine Echokompensationsstufe zugeordnet ist, mittels der für jedes Mikrofonsignal der Mikrofone der Mikrofonanordnung eine Echokompensation berechenbar ist.

Darüber hinaus ist zweckmäßigerweise jede Freisprechteileinheit mit einer Signalselektionsstufe, mittels der dasjenige echokompensierte Mikrofonsignal auswähl- und durchschaltbar ist, welches das beste Signal-Rausch-Verhältnis (SNR) aufweist, bzw. mit einer Signalkombinationsstufe versehen, mittels der die echokompensierten Mikrofonsignale zu einem Ausgangssignal kombinierbar sind.

Gemäß einer weiteren vorteilhaften Ausführungsform der erfindungsgemäßen Kommunikationsanlage für Kraftfahrzeuge weist jede Freisprechteileinheit eine Synthesefilterbank auf, mittels der die ausgewählten bzw. kombinierten Teilbandsignale zu einem Gesamtbandsignal zusammensetzbar sind und das Gesamtbandsignal an die Zentraleinheit der Mehrplatzfreisprechanlage weiterleitbar ist.

Um die Freisprechteileinheit bzw. die darin realisierten Funktionalitäten auch für die Innenraumkommunikationsanlage zu nutzen, ist es vorteilhaft, wenn jede Freisprechteileinheit eine Signalgenerierungsstufe für ein Eingangssignal der Innenraumkommunikationsanlage aufweist, mittels der aus dem Ausgangssignal der Signalselektionsstufe bzw. der Signalkombinationsstufe der Freisprechteileinheit oder den Mikrofonsignalen der Mikrofonanordnung das Eingangssignal für die Innenraumkommunikationsanlage generierbar ist.

Zur Verbesserung des in der Signalgenerierungsstufe erzeugten Eingangssignals für die Innenraumkommunikationsanlage ist es vorteilhaft, wenn jede Signalgenerierungsstufe eine adaptive Glättungsstufe aufweist, in die das Ausgangssignal der Signalselektionsstufe der Freisprechteileinheit oder ein in Abhängigkeit von den Ergebnissen der in der Signalselektionsstufe vorgenommenen Bearbeitung ausgewähltes Mikrofonsignal eingebbar ist.

Gemäß einer weiteren vorteilhaften Ausführungsform der erfindungsgemäßen Kommunikationsanlage für Kraftfahrzeuge weist jede Signalgenerierungsstufe für das Eingangssignal der Innenraumkommunikationsanlage eine Dämpfungsfaktorbestimmungsstufe auf, mittels der in Abhängigkeit von einem Referenzsignal und CAN-Informationen Dämpfungsfaktoren generierbar sind, mit denen das Ausgangssignal der adaptiven Glättungsstufe dämpfbar ist.

Gemäß einer weiteren vorteilhaften Weiterbildung der erfindungsgemäßen Kommunikationsanlage für Kraftfahrzeuge weist die Zentraleinheit der Mehrplatzfreisprechanlage in ihrem Sendepfad eine Analysefilterbank, in der die Ausgangssignale der Freisprechteileinheiten in einem Teilband bzw. Frequenzbereich verarbeitbar sind, eine adaptive Mischstufe, in der die Ausgangssignale der Analysefilterbank in ihrer Leistung anpassbar und gewünschte Sprachsignalkomponenten konstruktiv überlagerbar sind, eine Nachverarbeitungsstufe, in der das Ausgangsignal der adaptiven Mischstufe hinsichtlich Sprachqualität, Sprachverständlichkeit und Erkennrate optimierbar ist, und eine Synthesefilterbank auf, in der die als Teilbandsignale ausgebildeten Ausgangssignale der Nachverarbeitungsstufe zur Generierung des Ausgangssignals der Synthesefilterbank bzw. der Zentraleinheit zu einem Gesamtbandsignal kombinierbar sind.

Entsprechend kann die Zentraleinheit der Mehrplatzfreisprechanlage vorteilhaft in ihrem Empfangspfad eine Analysefilterbank, in der ein Eingangssignal in einem Teilband- bzw. Frequenzbereich verarbeitbar ist, eine Bandbreitenerweiterungsstufe, in der die Bandbreite des Ausgangssignals der Analysefilterbank mittels einer Schätzung und Resynthetisierung fehlender Frequenzbereiche erweiterbar ist, eine Lautstärkeregelungsstufe, mittels der die Lautsprecherwiedergabe in Abhängigkeit von einem Geräuschpegel einstellbar ist, und eine Synthesefilterbank aufweisen, mittels der das an einen Verstärker bzw. an die entsprechend dem antelefonierten Fahrzeuginsassen zugeordnete Lautsprecheranordnung weitergeleitete Ausgangssignal der Zentraleinheit generierbar ist.

Im Folgenden wird die Erfindung anhand einer Ausführungsform unter Bezugnahme auf die Zeichnung näher erläutert.

Es zeigen:
- Figur 1: eine prinzipielle Übersichtsdarstellung einer Ausführungsform einer erfindungsgemäßen Kommunikationsanlage für Kraftfahrzeuge;
- Figur 2: eine Prinzipdarstellung einer im dargestellten Ausführungsbeispiel einem Fahrzeugsitz zugeordneten Freisprechteileinheit der in Figur 1 gezeigten Ausführungsform der erfindungsgemäßen Kommunikationsanlage für Kraftfahrzeuge;
- Figur 3: eine prinzipielle Darstellung einer einer Innenraumkommunikationsanlage der erfindungsgemäßen Kommunikationsanlage für Kraftfahrzeuge zugeordneten Signalgenerierungsstufe der in Figur 2 gezeigten Freisprechteileinheit; und
- Figur 4: eine Prinzipdarstellung einer Ausführungsform einer Zentraleinheit einer Mehrplatzfreisprechanlage der erfindungsgemäßen Kommunikationsanlage für Kraftfahrzeuge.

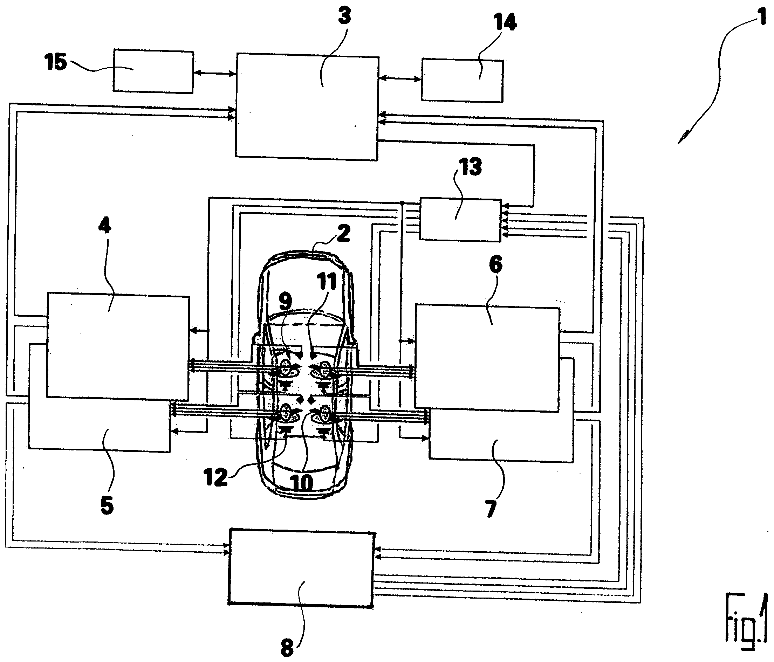

Eine in Figur 1 im Überblick dargestellte Ausführungsform einer erfindungsgemäßen Kommunikationsanlage 1 für Kraftfahrzeuge ist in der Figur in Verbindung mit einem in der Figur lediglich angedeuteten Kraftfahrzeug 2 beschrieben.

Mittels der Kommunikationsanlage 1 wird für das Kraftfahrzeug 2 sowohl eine Mehrplatzfreisprechanlage 3, 4, 5, 6, 7, die der Telefonie der Fahrzeuginsassen dienen soll, als auch eine Innenraumkommunikationsanlage 8, die der Kommunikation der Fahrzeuginsassen untereinander dienen soll, realisiert.

Zu der der Mehrplatztelefonie dienenden Mehrplatzfreisprechanlage 3, 4, 5, 6, 7 gehören eine Zentraleinheit 3 und im dargestellten Ausführungsbeispiel vier Freisprechteileinheiten 4, 5, 6, 7.

Die im dargestellten Ausführungsbeispiel vorgesehenen vier Freisprechteileinheiten 4, 5, 6, 7 sind jeweils einem Fahrzeuginsassen bzw. einem Fahrzeugsitz zugeordnet und an die Zentraleinheit 3 angeschlossen. Des Weiteren sind die vier Freisprechteileinheiten 4, 5, 6, 7 außer an die Zentraleinheit 3 der der Telefonie dienenden Mehrplatzfreisprechanlage auch an die der Innenraumkommunikation zwischen den Fahrzeuginsassen dienenden Innenraumkommunikationsanlage 8 angeschlossen.

Dadurch, dass mittels der vier Freisprechteileinheiten 4, 5, 6, 7 jeweils einem Fahrzeugsitz bzw. Fahrzeuginsassen zugeordnete Steuer- und Regelungsvorgänge realisierbar sind, kann die mittels der Zentraleinheit 3 der Mehrplatzfreisprechanlage zu realisierende Datentransferrate erheblich reduziert werden. Ein erheblicher Anteil der für den Betrieb der Mehrplatzfreisprechanlage erforderlichen Freisprechfunktionalitäten kann mittels der im dargestellten Ausführungsbeispiel je Fahrzeugsitz bzw. Fahrzeuginsassen vorgesehenen Freisprechteileinheiten 4, 5, 6, 7 realisiert werden.

Im dargestellten Ausführungsbeispiel der Kommunikationsanlage 1 ist jedem Fahrzeuginsassen bzw. jedem Fahrzeugsitz eine Mikrofonanordnung 9 zugeordnet. Die Mikrofonanordnung 9 hat im dargestellten Ausführungsbeispiel drei im Einzelnen nicht dargestellte Mikrofone, die an einem Sicherheitsgurt 10 angeordnet sind, von denen je Fahrzeuginsasse bzw. Fahrzeuginsassen einer vorhanden ist. Des Weiteren gehört zu der Mikrofonanordnung 9 ein weiteres Mikrofon 11, das in geeigneter Weise im Bereich des jeweiligen Fahrzeugsitzes angeordnet ist. Die am Sicherheitsgurt 10 angeordneten Mikrofone sowie das weitere Mikrofon 11 jeder Mikrofonanordnung 9 sind an die dem jeweiligen Fahrzeugsitz bzw. Fahrzeuginsassen zugeordnete Freisprechteileinheit 4, 5, 6 bzw. 7 angeschlossen.

Des Weiteren ist im Falle des in Figur 1 gezeigten Ausführungsbeispiels der erfindungsgemäßen Kommunikationsanlage 1 je Fahrzeuginsasse bzw. je Fahrzeugsitz eine Lautsprecheranordnung 12 vorgesehen, wobei in der Figur lediglich ein einziger Lautsprecher 12 je Lautsprecheranordnung gezeigt ist. Jeder Lautsprecher 12 ist über einen Verstärker 13 an die Zentraleinheit 3 der Mehrplatzfreisprechanlage 3, 4, 5, 6, 7 angeschlossen.

Die Zentraleinheit 3 der Mehrplatzfreisprechanlage ist an ein Telefonmodul 14 und an eine Sprachdialogeinheit 15 angeschlossen.

Auch die Innenraumkommunikationsanlage 8 ist an den Verstärker 13 angeschlossen.

Die Zentraleinheit 3 der Mehrplatzfreisprechanlage übernimmt die Durchführung sämtlicher erforderlichen Freisprechfunktionalitäten, die nicht besser dezentral von den Freisprechteileinheiten 4, 5, 6, 7 realisiert werden. Auf die Zentraleinheit 3 können über die Freisprechteileinheiten 4, 5, 6, 7 sämtliche Fahrzeuginsassen von jedem Fahrzeugsitz aus gleichzeitig zugreifen.

An dieser Stelle sei darauf hingewiesen, dass zu der Mehrplatzfreisprechanlage statt vier auch eine beliebige andere Anzahl von Freisprechteileinheiten gehören kann.

Im dargestellten Ausführungsbeispiel der Kommunikationsanlage werden lediglich vorselektierte Mikrofonsignale, d.h. ein Signal pro Fahrzeugsitz, an die Zentraleinheit 3 der Mehrplatzfreisprechanlage übertragen. Innerhalb der Zentraleinheit 3 werden die vorselektierten Mikrofonsignale zunächst kombiniert, es wird eine Nachverarbeitung durchgeführt und schließlich das resultierende Signal über das vorstehend erwähnte Telefonmodul 14 zur fernen Gegenstelle bzw. zur Sprachdialogeinheit 15 übertragen.

Um den Rechenaufwand in der Mehrplatzfreisprechanlage 3, 4, 5, 6, 7 zu reduzieren, wird im Falle der erfindungsgemäßen Kommunikationsanlage 1 eine empfangsseitige Verarbeitung nicht auf den Freisprechteileinheiten 4, 5, 6, 7, sondern auf der Zentraleinheit 3 berechnet. Da hier lediglich ein einziges Ausgangssignal generiert wird, welches über die verschiedenen Lautsprecheranordnungen 12 im Kraftfahrzeug 2 wiedergegeben wird.

Im Falle der vorstehend geschilderten prinzipiellen Struktur der erfindungsgemäßen Kommunikationsanlage kann - auch während die Mehrplatzfreisprechanlage 3, 4, 5, 6, 7 in Betrieb ist und ein Telefongespräch abgewickelt wird - eine Kommunikation innerhalb des Fahrzeuginnenraums realisiert werden. Damit auch hier eine geringe Datenmenge übertragen wird, wird lediglich eine Auswahl an Mikrofonsignalen verwendet. Hier können die von den Freisprechteileinheiten 4, 5, 6, 7 vorselektierten Ausgangssignale verwendet bzw. die dort vorliegenden Informationen über die Mikrofonauswahl genutzt werden.

Wie bereits erwähnt, gehören zu jeder jeweils einem Fahrzeugsitz bzw. Fahrzeuginsassen zugeordneten Mikrofonanordnung 9 ein Gurtmikrofonsystem mit drei im Einzelnen nicht dargestellten Mikrofonen, die in den Sicherheitsgurt 10 integriert sind. Das je Mikrofonanordnung 9 vorgesehene weitere Mikrofon 11 kann beispielweise an einer dem betreffenden Fahrzeugsitz zugeordneten Dachbedieneinheit verbaut sein. In den Sicherheitsgurt 10 integrierte Gurtmikrofonsysteme haben sich bewährt, da hiermit ein deutlich verbessertes Signal-Rausch-Verhältnis (SNR) im Vergleich zu Standardmikrofonen erreicht werden kann.

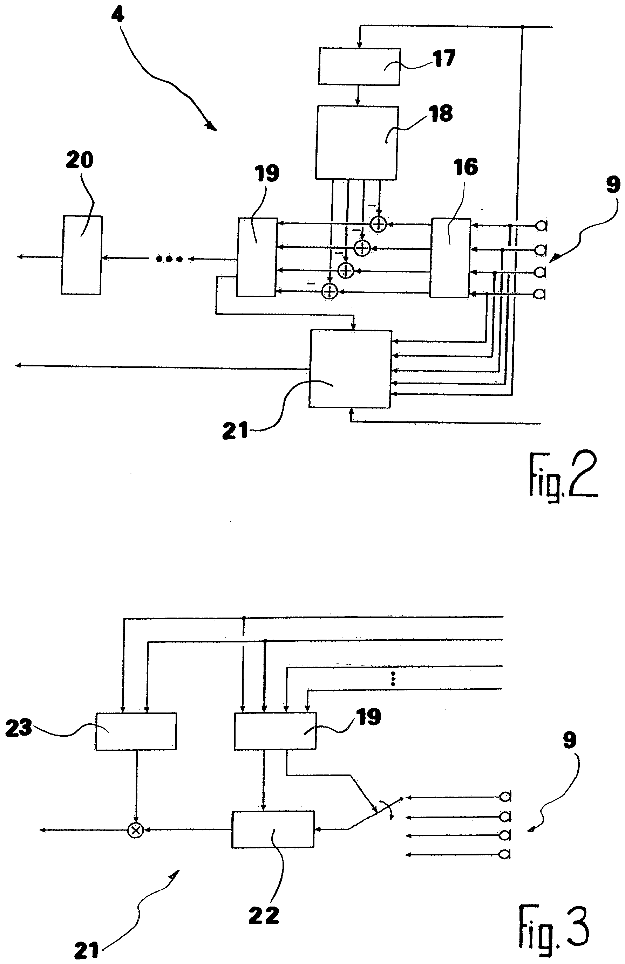

Eine in Figur 2 anhand eines Ausführungsbeispiels im Einzelnen prinzipiell dargestellte Freisprechteileinheit 4 der Mehrplatzfreisprechanlage 3, 4, 5, 6, 7 entspricht den weiteren Freisprechteileinheiten 5, 6, 7. Die Freisprechteileinheit 4 ist einem Fahrzeugsitz bzw. einem Fahrzeuginsassen zugeordnet. Diese Freisprechteileinheit 4 übernimmt Freisprechfunktionalitäten sowie die Generierung eines Eingangssignals für die Innenraumkommunikationsanlage 8 der Kommunikationsanlage 1. Als Eingangssignale der Freisprechteileinheit 4 dienen die drei Mikrofonsignale der am Sicherheitsgurt 10 vorgesehenen drei Mikrofone sowie das Mikrofonsignal des weiteren, beispielsweise an der Dachbedieneinheit verbauten Mikrofons 11.

An dieser Stelle sei darauf hingewiesen, dass das weitere Mikrofon 11 auch an anderen geeigneten Stellen installiert sein kann, beispielsweise an einem Rückspiegel.

Die in der Freisprechteileinheit 4 realisierten Teilverfahren der insgesamt in der Mehrplatzfreisprechanlage realisierten Verfahren werden im Frequenz- bzw. Teilbandbereich realisiert, um so den Rechenaufwand zu reduzieren.

In der Freisprechteileinheit 4 ist eingangsseitig eine Analysefilterbank 16 vorgesehen, der die Mikrofonsignale der drei in den Sicherheitsgurt 10 integrierten Mikrofone sowie des weiteren Mikrofons 11 zugeführt werden.

Einer weiteren Analysefilterbank 17 wird ein Referenzsignal zugeführt. Vor einer Signalkombination, sofern diese zeitveränderlich ausgeführt werden soll, wird in einer Echokompensationsstufe 18 für jedes der drei in den Sicherheitsgurt 10 integrierten Mikrofone und das weitere Mikrofon 11 eine Echokompensation berechnet. Da bei der Berechnung der Echokompensation für die drei in den Sicherheitsgurt 10 integrierten Mikrofone und das weitere Mikrofon 11 das gleiche Lautsprechersignal verwendet wird, ist die Komplexität geringer als das Dreifache einer Einkanal-Echokompensation. Um eine geeignete Mikrofonselektion zu ermöglichen, ist es zweckmäßig, die Echokompensation in der Freisprechteileinheit 4 zu berechnen. Im Anschluss an die Echokompensation folgt die Kombinierung der Mikrofonsignale zu einem Ausgangssignal bzw. eine geeignete Signalselektion in einer Signalkombinations- bzw. Signalselektionsstufe 19. Bei der Signalselektion wird dasjenige echokompensierte Mikrofonsignal ausgewählt und für die weitere Verarbeitung durchgeschaltet, welches das beste Signal-Rausch-Verhältnis (SNR) aufweist.

Falls eine Signalkombination vorgesehen ist, können verschiedene Beamformer-Strukturen, welche lediglich Signale aus der Vorzugsrichtung durchlassen, eingesetzt werden.

Nach der Signalkombinations- bzw. Signalselektionsstufe 19, die im Frequenz- bzw. Teilbandbereich stattfindet, können weitere Verfahrensstufen zur Sprachsignalverbesserung durchgeführt werden. Beispielsweise kann hier eine geeignete Krawatten- und Windgeräuschreduktion eingesetzt werden.

Abschließend wird eine Synthesefilterbank 20 eingesetzt, um die Teilbandsignale zu einem Gesamtbandsignal zusammenzusetzen. Das resultierende Ausgangssignal der Freisprechteileinheit 4 wird schließlich an die Zentraleinheit 3 der Mehrplatzfreisprechanlage, bei der es sich z.B. um eine Head-Unit des Kraftfahrzeugs 2 handeln kann, weitergeleitet.

Auch für die Realisierung der Kommunikation im Innenraum des Kraftfahrzeugs 2 mittels der Innenraumkommunikationsanlage 8 ist es zweckmäßig, wenn eine Vorauswahl zwischen den Mikrofonsignalen getroffen wird, um so die Datentransferrate und den Rechenaufwand zu reduzieren. Das selektierte Mikrofonsignal, welches in der Freisprechteileinheit 4 berechnet wird, kann selbstverständlich auch als Eingangssignal für die Innenraumkommunikationsanlage 8 eingesetzt werden. Allerdings ist hier zu berücksichtigen, dass für die Innenraumkommunikationsanlage 8 nur eine vergleichsweise geringe Gesamtverzögerung erlaubt ist. Die eingefügte Signallaufzeit, die auf die digitale Signalverarbeitung der Innenraumkommunikationsanlage 8 und der für die Lautsprecher 12 nachgeschalteten Verstärker 13 zurückgeht, sollte 10 ms nicht übersteigen, anderenfalls gilt das Gesetz der ersten Wellenfront, d.h. der sog. Präzedenz-Effekt, nicht mehr. Durch die in der Freisprechteileinheit 4 eingesetzten Analysefilterbänke 16, 17 und die Synthesefilterbank 20 im Sendepfad der Freisprechteileinheit 4 wird diese Bedingung häufig nicht erfüllt.

Daher ist im Falle der in Figur 2 gezeigten Ausführungsform der Freisprechteileinheit 4 eine Signalgenerierungsstufe 21 vorgesehen, die hinsichtlich ihres Aufbaus und ihrer Struktur in Figur 3 im Einzelnen gezeigt ist. Für die Selektion eines Eingangssignals der Innenraumkommunikationsanlage 8 wird daher vorgeschlagen, auf zuvor ermittelte Schätzwerte der Signalselektionsstufe 19 zurückzugreifen. Aus Robustheitsgründen ist es ohnehin erforderlich, basierend auf einigen vorangegangenen Schätzwerten das beste Mikrofonsignal zu ermitteln. Hier wird zunächst eine Langzeitschätzung des jeweils ausgewählten Mikrofons vorgenommen. Diese Information wird neben weiteren Kenngrößen verwendet, um das bestmögliche Mikrofonsignal im Zeitbereich auszuwählen bzw. durchzuschalten. Mittels einer Sprachaktivitätsdetektion wird bei der in Figur 3 im Einzelnen gezeigten Signalgenerierungsstufe 21 die Sprachaktivität eines fernen Gesprächsteilnehmers ermittelt. Bei vorhandener Sprachaktivität desselben ist es zweckmäßig, die Innenraumkommunikationsanlage 8 möglichst auszuschalten, da ansonsten Echokomponenten verstärkt über die Lautsprecheranordnungen 12 wiedergegeben würden. Daher wird hier vorgeschlagen, dass bei vorhandener ferner Sprachanregung auf das durchgeschaltete Mikrofonsignal, das in einer adaptiven Glättungsstufe 22 geglättet worden ist, eine hohe Dämpfung angewendet wird, die in einer Dämpfungsfaktorbestimmungsstufe 23 der Signalgenerierungsstufe 21 bestimmt wird. Mittels der Dämpfungsfaktorbestimmungsstufe 23 zugeführter CAN- oder LIN-Informationen kann ausgewertet werden, um z.B. zu erfassen, ob bzw. welche Sicherheitsgurte 10 mit in ihnen fest verbauten Mikrofonen angeschlossen worden sind.

Weiterhin sollte sichergestellt werden, dass bei ferner Anregung oder bei Geräuschpassagen keine Mikrofonselektion durchgeführt wird. Hier sollte der letzte Schätzwert der Selektion weiterverwendet werden, um Fehlschätzungen zu vermeiden.

Die vorstehend beispielhaft anhand der Freisprechteileinheit 4 beschriebenen Freisprechteileinheiten 4, 5, 6, 7 der Mehrplatzfreisprechanlage sind sämtlich an die Zentraleinheit 3 derselben angeschlossen. Auf dieser Zentraleinheit 3 werden die verbleibenden Verfahrensschritte, welche zur Realisierung der Freisprechfunktionalitäten erforderlich sind, realisiert.

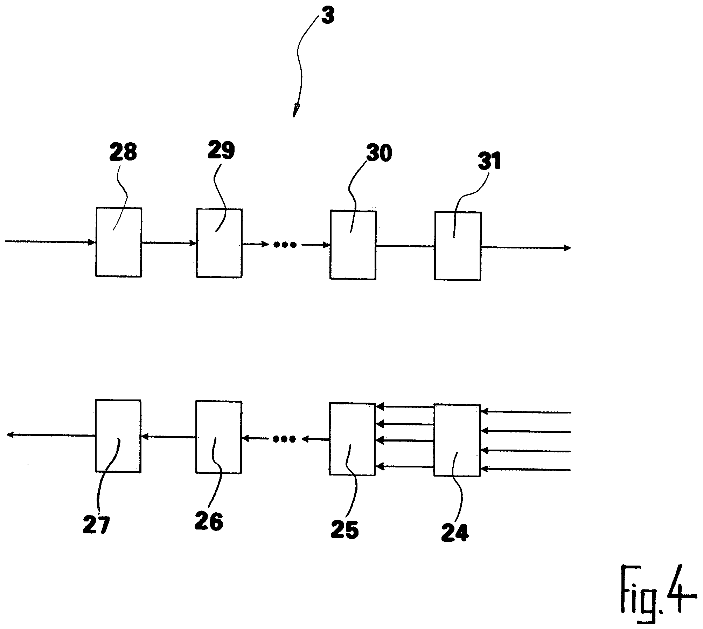

Bei einer in Figur 4 anhand eines Ausführungsbeispiels dargestellten Zentraleinheit 3 der Mehrplatzfreisprechanlage 3, 4, 5, 6, 7 werden sämtliche Algorithmen der digitalen Signalverarbeitung im Frequenz- bzw. Teilbandbereich realisiert, um den Aufwand zu reduzieren.

Zunächst werden die Eingangssignale der Zentraleinheit 3, d.h. alle Ausgangssignale der sitzplatz- bzw. fahrzeuginsassenspezifischen Freisprechteileinheiten 4, 5, 6, 7, mittels einer Analysefilterbank 24, die im Sendepfad der Zentraleinheit 3 vorgesehen ist, in den Frequenzbereich transformiert. Anschließend wird in der Zentraleinheit 3 eine adaptive Mischstufe 25 eingesetzt, in der die Eingangssignale der Zentraleinheit 3 zunächst in der Leistung angepasst und daraufhin mittels der gewünschten Sprachsignalkomponenten konstruktiv überlagert werden. Danach können im Sendepfad weitere Teilverfahren durchgeführt werden, um das gemischte Signal, bevor es über das Telefonmodul 14 zum fernen Gesprächsteilnehmer oder zur Sprachdialogeinheit 15 übertragen wird, hinsichtlich der Sprachqualität und Sprachverständlichkeit bzw. hinsichtlich der Erkennrate zu verbessern. Diese vorstehend erwähnten Teilverfahren werden in einer Nachverarbeitungsstufe 26 der Zentraleinheit 3 realisiert.

Schließlich werden mittels einer Synthesefilterbank 27 im Sendepfad der Zentraleinheit 3 alle Teilbandsignale zu einem Gesamtbandsignal kombiniert, um das Ausgangssignal bzw. Uplinksignal oder Sendesignal zu bestimmen.

Auch im in Figur 4 ebenfalls dargestellten Empfangspfad der Zentraleinheit 3 kann eine Verarbeitung im Frequenz- bzw. Teilbandbereich durchgeführt werden. Das empfangene Signal bzw. das Downlinksignal ist in seiner Bandbreite begrenzt. Dieses Signal wird zunächst einer im Empfangspfad der Zentraleinheit 3 vorgesehenen Analysefilterbank 28 zugeführt und dort bearbeitet. Hinter der Analysefilterbank 28 wird das in seiner Bandbreite begrenzte Signal in einer Bandbreitenerweiterungsstufe 29 der Zentraleinheit 3 erweitert, wobei hier die fehlenden Frequenzbereiche geschätzt und resynthetisiert werden. Im Anschluss daran folgen weitere Verfahrensstufen, wie beispielsweise eine in einer Lautstärkeregelungsstufe 30 realisierte adaptive Lautstärkeregelung, welche automatisch die Lautsprecherwiedergabe in Abhängigkeit des Geräuschpegels einstellt. Letztlich wird eine Synthesefilterbank 31 eingesetzt, mittels der das Ausgangssignal des Empfangspfads der Zentraleinheit 3 generiert wird, welches dann zum Verstärker 13 bzw. zu den Lautsprecheranordnungen 12 übertragen wird.

Mit der vorstehend geschilderten Struktur und dem daraus resultierenden Aufbau der Kommunikationsanlage sinkt der Rechenleistungsbedarf der Zentraleinheit 3, der beispielsweise auf der Head-Unit des Kraftfahrzeugs 2 läuft, beträchtlich. Durch die verteilte Architektur werden zentrale Bussysteme des Kraftfahrzeugs 2 entlastet, da lediglich nur etwa ein Viertel der ansonsten üblichen Datenmengen übertragen werden muss.

Die vorstehend geschilderte Kommunikationsanlage 1 kann sowohl in Kleinfahrzeugen als auch in Großfahrzeugen eingesetzt werden.

## Patentansprüche

1. Kommunikationsanlage für Kraftfahrzeuge, mit einer Mehrplatzfreisprechanlage (3, 4, 5, 6, 7), mittels der für jeden Fahrzeuginsassen an dessen Fahrzeugsitz eine Telefonie-Freisprechfunktionalität realisierbar ist, einer Innenraumkommunikationsanlage (8), mittels der eine Kommunikation für voneinander entfernt im Fahrzeuginnenraum befindliche Fahrzeuginsassen realisierbar ist, Mikrofonanordnungen (9), die an die Mehrplatzfreisprechanlage (3, 4, 5, 6, 7) und die Innenraumkommunikationsanlage (8) angeschlossen sind, wobei jedem Fahrzeugsitz bzw. jedem Fahrzeuginsassen eine Mikrofonanordnung (9) zugeordnet ist, und Lautsprecheranordnungen (12), die an die Mehrplatzfreisprechanlage (3, 4, 5, 6, 7) und die Innenraumkommunikationsanlage (8) angeschlossen sind, wobei jedem Fahrzeugsitz bzw. Fahrzeuginsassen eine Lautsprecheranordnung (12) zugeordnet ist, **dadurch gekennzeichnet, dass** die Mehrplatzfreisprechanlage (3, 4, 5, 6, 7) eine Zentraleinheit (3) und für jeden Fahrzeugsitz eine Freisprechteileinheit (4, 5, 6, 7) aufweist, mittels der aus den von der ihr zugeordneten Mikrofonanordnung (9) erfassten Signalen ein Ausgangssignal auswähl- oder generierbar und an die Zentraleinheit (3) der Mehrplatzfreisprechanlage (3, 4, 5, 6, 7) und an die Innenraumkommunikationsanlage (8) weiterleitbar ist.

2. Kommunikationsanlage für Kraftfahrzeuge nach Anspruch 1, bei der ein in der Zentraleinheit (3) der Mehrplatzfreisprechanlage (3, 4, 5, 6, 7) von einer kraftfahrzeugexternen Gegenstelle empfangenes Telefonsignal in der Zentraleinheit (3) zu einem Ausgangssignal verarbeit- und als solches an die Lautsprecheranordnung (12) weiterleitbar ist, die dem von der Gegenstelle angewählten Fahrzeuginsassen zugeordnet ist.

3. Kommunikationsanlage für Kraftfahrzeuge nach Anspruch 1 oder 2, bei der jede Mikrofonanordnung (9) zumindest ein, vorzugsweise drei in einen Sicherheitsgurt (10) integrierte Mikrofone und zumindest ein weiteres, im Bereich des jeweiligen Fahrzeugsitzes geeignet, z.B. an einer dem Fahrzeugsitz zugeordneten Dachbedieneinheit, an einem Rückspiegel etc., angeordnetes Mikrofon (10) aufweist.

4. Kommunikationsanlage für Kraftfahrzeuge nach einem der Ansprüche 1 bis 3, bei der die Zentraleinheit (3) der Mehrplatzfreisprechanlage (3, 4, 5, 6, 7) in einen Zentralrechner bzw. einer Head-Unit des Kraftfahrzeugs (2) integriert ist.

5. Kommunikationsanlage für Kraftfahrzeuge nach einem der Ansprüche 1 bis 4, bei der die Innenraumkommunikationsanlage (8) im Zentralrechner bzw. in der Head-Unit des Kraftfahrzeugs (2) integriert ist.

6. Kommunikationsanlage für Kraftfahrzeuge nach einem der Ansprüche 1 bis 5, bei der jede Freisprechteileinheit (4, 5, 6, 7) eine der Mikrofonanordnung (9) zugeordnete Analysefilterbank (16) und eine einem Referenzsignal zugeordnete Analysefilterbank (17) aufweist, der eine Echokompensationsstufe (18) zugeordnet ist, mittels der für jedes Mikrofonsignal der Mikrofone der Mikrofonanordnung (9) eine Echokompensation berechenbar ist.

7. Kommunikationsanlage für Kraftfahrzeuge nach einem der Ansprüche 1 bis 6, bei der jede Freisprechteileinheit (4, 5, 6, 7) eine Signalselektionsstufe (19), mittels dasjenige echokompensierte Mikrofonsignal auswähl- und durchschaltbar ist, welches das beste Signal-Rausch-Verhältnis (SNR) aufweist, bzw. eine Signalkombinationsstufe aufweist, mittels der die echokompensierten Mikrofonsignale zu einem Ausgangssignal kombinierbar sind.

8. Kommunikationsanlage für Kraftfahrzeuge nach einem der Ansprüche 1 bis 7, bei der jede Freisprechteileinheit (4, 5, 6, 7) eine Synthesefilterbank (20) aufweist, mittels der die ausgewählten bzw. kombinierten Teilbandsignale zu einem Gesamtbandsignal zusammensetzbar sind und das Gesamtbandsignal an die Zentraleinheit (3) der Mehrplatzfreisprechanlage (3, 4, 5, 6, 7) weiterleitbar ist.

9. Kommunikationsanlage für Kraftfahrzeuge nach Anspruch 7 oder 8, bei der jede Freisprechteileinheit (4, 5, 6, 7) eine Signalgenerierungsstufe (21) für ein Eingangssignal der Innenraumkommunikationsanlage (8) aufweist, mittels der aus dem Ausgangssignal der Signalselektionsstufe (19) bzw. der Signalkombinationsstufe der Freisprechteileinheit (4, 5, 6, 7) oder den Mikrofonsignalen der Mikrofonanordnung (9) das Eingangssignal für die Innenraumkommunikationsanlage (8) generierbar ist.

10. Kommunikationsanlage für Kraftfahrzeuge nach Anspruch 9, bei der jede Signalgenerierungsstufe (21) für das Eingangssignal der Innenraumkommunikationsanlage (8) eine adaptive Glättungsstufe (22) aufweist, in die das Ausgangssignal der Signalselektionsstufe (19) der Freisprechteileinheit (4, 5, 6, 7) oder ein in Abhängigkeit von den Ergebnissen der in der Signalselektionsstufe (19) vorgenommenen Bearbeitung ausgewähltes Mikrofonsignal eingebbar ist.

11. Kommunikationsanlage für Kraftfahrzeuge nach Anspruch 10, bei der jede Signalgenerierungsstufe (21) für das Eingangssignal der Innenraumkommunikationsanlage (8) eine Dämpfungsfaktorbestimmungsstufe (23) aufweist, mittels der in Abhängigkeit von einem Referenzsignal und CAN-Informationen Dämpfungsfaktoren generierbar sind, mit denen das Ausgangssignal der adaptiven Glättungsstufe (22) dämpfbar ist.

12. Kommunikationsanlage für Kraftfahrzeuge nach einem der Ansprüche 1 bis 11, bei der die Zentraleinheit (3) der Mehrplatzfreisprechanlage (3, 4, 5, 6, 7) in ihrem Sendepfad eine Analysefilterbank (24), in der die Ausgangssignale der Freisprechteileinheiten (4, 5, 6, 7) in einen Teilband- bzw. Frequenzbereich verarbeitbar sind, eine adaptive Mischstufe (25), in der die Ausgangssignale der Analysefilterbank (24) in ihrer Leistung anpassbar und gewünschte Sprachsignalkomponenten konstruktiv überlagerbar sind, eine Nachverarbeitungsstufe (26), in der das Ausgangssignal der adaptiven Mischstufe (25) hinsichtlich Sprachqualität, Sprachverständlichkeit und Erkennrate optimierbar ist, und eine Synthesefilterbank (27) aufweist, in der die als Teilbandsignale ausgebildeten Ausgangssignale der Nachverarbeitungsstufe (26) zur Generierung des Ausgangssignals der Synthesefilterbank (27) bzw. der Zentraleinheit (3) zu einem Gesamtbandsignal kombinierbar sind.

13. Kommunikationsanlage für Kraftfahrzeuge nach einem der Ansprüche 1 bis 12, bei der die Zentraleinheit (3) der Mehrplatzfreisprechanlage (3, 4, 5, 6, 7) in ihrem Empfangspfad eine Analysefilterbank (28), in der ein Eingangssignal in einem Teilband- bzw. Frequenzbereich verarbeitbar ist, eine Bandbreitenerweiterungsstufe (29), in der die Bandbreite des Ausgangssignals der Analysefilterbank (28) mittels einer Schätzung und Resynthetisierung fehlender Frequenzbereiche erweiterbar ist, eine Lautstärkeregelungsstufe (30), mittels der die Lautsprecherwiedergabe in Abhängigkeit von einem Geräuschpegel einstellbar ist, und eine Synthesefilterbank (31) aufweist, mittels der das an einen Verstärker (13) bzw. an die entsprechend dem antelefonierten Fahrzeuginsassen zugeordnete Lautsprecheranordnung (12) weitergeleitete Ausgangssignal der Zentraleinheit (3) generierbar ist.

## Claims

1. A communications system for motor vehicles comprising a multi-user hands-free system (3, 4, 5, 6, 7) by means of which hands-free telephony functionality can be achieved for each vehicle occupant on their vehicle seat, an interior communications system (8) by means of which communication can be achieved for vehicle occupants located remote from one another in the vehicle interior, microphone arrays (9) which are connected to the multi-user hands-free system (3, 4, 5, 6, 7) and the interior communications system (8), wherein a microphone array (9) is assigned to each vehicle seat or to each vehicle passenger and speaker arrangements (12) which are connected to the multi-user hands-free system (3, 4, 5, 6, 7) and the interior communications system (8), wherein a speaker arrangement (12) is assigned to each vehicle seat or vehicle occupant, **characterized in that** the multi-user hands-free system (3, 4, 5, 6, 7) has a central unit (3) and for each vehicle seat a hands-free sub-unit (4, 5, 6, 7), by means of which an output signal can be selected or generated from the signals detected by the microphone array (9) assigned to the hands-free sub-unit and relayed to the central unit (3) of the multi-user hands-free system (3, 4, 5, 6, 7) and to the interior communications system (8).

2. The communications system for motor vehicles according to claim 1, wherein a telephone signal received from a remote station external to the motor vehicle in the central unit (3) of the multi-user hands-free speaker system (3, 4, 5, 6, 7) can be processed into an output signal in the central unit (3) and relayed as such to the speaker arrangement (12) which is assigned to the vehicle occupant selected by the remote station.

3. The communications system for motor vehicles according to claim 1 or 2, wherein each microphone array (9) has at least one, preferably three, microphones integrated in a seat belt (10) and at least one further microphone (10) arranged in the region of the respective vehicle seat, e.g. on a roof control unit assigned to the vehicle seat, on a rear-view mirror, etc..

4. The communications system for motor vehicles according to one of claims 1 to 3, wherein the central unit (3) of the multi-user hands-free speaker system (3, 4, 5, 6, 7) is integrated in a central computer or a head unit of the motor vehicle (2).

5. The communications system for motor vehicles according to one of claims 1 to 4, wherein the interior communications system (8) is integrated in the central computer or in the head unit of the motor vehicle.

6. The communications system for motor vehicles according to one of claims 1 to 5, wherein each hands-free parts unit (4, 5, 6, 7) has an analysis filter bank (16) assigned to the microphone array (9) and an analysis filter bank (17) assigned to a reference signal, which analysis filter bank is assigned an echo cancellation stage (18) by means of which echo cancellation can be calculated for each microphone signal of the microphones in the microphone array (9).

7. The communications system for motor vehicles according to one of claims 1 to 6, wherein each hands-free sub-unit (4, 5, 6, 7) has a signal selection stage (19) by means of which an echo-cancelled microphone signal which has the best signal-to-noise ratio (SNR) or else a signal combination stage by means of which the echo-cancelled microphone signals can be combined into an output signal can be selected or connected through.

8. The communications system for motor vehicles according to one of the claims 1 to 7, wherein each hands-free part unit (4, 5, 6, 7) has a synthesis filter bank (20) by means of which the chosen or combined sub-band signals can be combined into an overall band signal and the overall band signal can be relayed to the central unit (3) of the multi-user hands-free system (3, 4, 5, 6, 7).

9. The communications system for motor vehicles according to claim 7 or 8, wherein each hands-free sub-unit (4, 5, 6, 7) has a signal-generating stage (21) for an input signal of the interior communications system (8), by means of which the input signal for the interior communications system (8) can be generated from the output signal of the signal selection stage (19) or the signal combination stage of the hands-free sub-unit (4, 5, 6, 7) or the microphone signals of the microphone array (9).

10. The communications system for motor vehicles according to claim 9, wherein each signal-generating stage (21) for the input signal of the interior communications system (8) has an adaptive smoothing stage (22) into which the output signal of the signal selection stage (19) of the hands-free sub-unit (4, 5, 6, 7) or a microphone signal selected depending on the results of the processing undertaken in the signal selection stage (19) can be input.

11. The communications system for motor vehicles according to claim 10, wherein each signal-generating stage (21) has a damping factor determination stage (23) for the input signal of the interior communications system (8), by means of which damping factors can be generated depending on a reference signal and CAN information, with which the output signal of the adaptive smoothing stage (22) can be damped.

12. The communications system for motor vehicles according to one of claims 1 to 11, wherein the central unit (3) of the multi-user hands-free system (3, 4, 5, 6, 7) has in its transmission path an analysis filter bank (24) in which the output signals of the hands-free sub-units (4, 5, 6, 7) can be processed in a sub-band or frequency range, an adaptive mixing stage (25) in which the output signals of the analysis filter bank (24) can be adapted in terms of their output and desired speech signal components can be structurally overlaid, a reprocessing stage (26) in which the output signal of the adaptive mixing stage (25) can be optimized in terms of speech quality, speech comprehensibility and recognition rate, and a synthesis filter bank (27) in which the output signals of the reprocessing stage (26) configured as partial band signals can be combined to generate the output signal of the synthesis filter bank (27) or of the central unit (3) into an overall band signal.

13. The communications system for motor vehicles according to one of claims 1 to 12, wherein the central unit (3) of the multi-user hands-free system (3, 4, 5, 6, 7) has in its reception path an analysis filter bank (28) in which an input signal can be processed in a partial band or frequency range, a bandwidth extension stage (29) in which the bandwidth of the output signal of the analysis filter bank (28) can be extended by means of an evaluation and resynthesization of missing frequency ranges, a speaker control stage (30) by means of which the speaker output can be adjusted depending on a noise level, and a synthesis filter bank (31) by means of which the output signal of the central unit (3) relayed to an amplifier (13) or to the speaker arrangement (12) assigned accordingly to the vehicle occupants being called can be generated.

## Revendications

1. Installation de communication pour véhicules automobiles, avec un kit mains libres multiposte (3, 4, 5, 6, 7) au moyen duquel il est possible de réaliser, pour chaque passager de véhicule, au niveau de son siège de véhicule, une fonctionnalité de téléphonie mains libres, une installation de communication d'habitacle (8) au moyen de laquelle il est possible de réaliser une communication pour des passagers de véhicule se trouvant éloignés les uns des autres dans l'habitacle, des agencements de microphones (9) qui sont raccordés aux kit mains libres multiposte (3, 4, 5, 6, 7) et à l'installation de communication d'habitacle (8), dans laquelle on associe, à chaque siège de véhicule ou à chaque passager de véhicule, un agencement de microphones (9), et des agencements de haut-parleurs (12) qui sont raccordés au kit mains libres multiposte (3, 4, 5, 6, 7) et à l'installation de communication d'habitacle (8), dans laquelle on associe, à chaque siège de véhicule ou passager de véhicule, un agencement de haut-parleurs (12), **caractérisée en ce que** le kit mains libres multiposte (3, 4, 5, 6, 7) présente une unité centrale (3) et, pour chaque siège de véhicule, une sous-unité mains libres (4, 5, 6, 7) au moyen de laquelle un signal de sortie peut être sélectionné ou généré à partir des signaux détectés par l'agencement de microphones (9) qui lui est associé et être retransmis à l'unité centrale (3) du kit mains libres multiposte (3, 4, 5, 6, 7) et à l'installation de communication d'habitacle (8).

2. Installation de communication pour véhicules automobiles selon la revendication 1, dans laquelle un signal téléphonique réceptionné dans l'unité centrale (3) du kit mains libres multiposte (3, 4, 5, 6, 7) de la part d'un poste correspondant externe au véhicule est transformé dans l'unité centrale (3) en un signal de sortie - et peut être retransmis en tant que tel à l'agencement de haut-parleurs (12) qui est associé au passager de véhicule sélectionné par le poste correspondant.

3. Installation de communication pour véhicules automobiles selon la revendication 1 ou 2, dans laquelle chaque agencement de microphones (9) présente au moins un, de préférence trois microphones intégrés dans une ceinture de sécurité (10) et au moins un autre microphone (10) dans la zone du siège de véhicule respectif, par exemple disposé de manière adéquate sur une unité de commande de toit associée au siège de véhicule, sur un rétroviseur, etc.

4. Installation de communication pour véhicules automobiles selon l'une des revendications 1 à 3, dans laquelle l'unité centrale (3) du kit mains libres multiposte (3, 4, 5, 6, 7) est intégrée dans un ordinateur central ou une unité centrale du véhicule automobile (2).

5. Installation de communication pour véhicules automobiles selon l'une des revendications 1 à 4, dans laquelle l'installation de communication d'habitacle (8) est intégrée dans l'ordinateur central ou dans l'unité centrale du véhicule automobile (2).

6. Installation de communication pour véhicules automobiles selon l'une des revendications 1 à 5, dans laquelle chaque sous-unité mains libres (4, 5, 6, 7) présente un banc de filtres d'analyse (16) associé à l'agencement de microphones (9) et un banc de filtres d'analyse (17) associé à un signal de référence auquel un étage d'annulation d'écho (18) est associé au moyen duquel il est possible de calculer une annulation d'écho pour chaque signal de microphone des microphones de l'agencement de microphones (9).

7. Installation de communication pour véhicules automobiles selon l'une des revendications 1 à 6, dans laquelle chaque sous-unité mains libres (4, 5, 6, 7) présente un étage de sélection de signaux (19) au moyen duquel il est possible de sélectionner et commuter celui des signaux de microphone à écho annulé qui présente le meilleur rapport signal-bruit (SNR) ou présente un étage de combinaison de signaux au moyen duquel les signaux de microphone à écho annulé peuvent être combinés en un signal de sortie.

8. Installation de communication pour véhicules automobiles selon l'une des revendications 1 à 7, dans laquelle chaque sous-unité mains libres (4, 5, 6, 7) présente un banc de filtres de synthèse (20) au moyen duquel les signaux de sous-bande sélectionnés ou combinés peuvent être assemblés en un signal de bande complète, et le signal de bande complète peut être retransmis à l'unité centrale (3) du kit mains libres multiposte (3, 4, 5, 6, 7).

9. Installation de communication pour véhicules automobiles selon la revendication 7 ou 8, dans laquelle chaque sous-unité mains libres (4, 5, 6, 7) présente un étage de génération de signal (21) pour un signal d'entrée de l'installation de communication d'habitacle (8) au moyen duquel il est possible de générer, à partir du signal de sortie de l'étage de sélection de signaux (19) ou de l'étage de combinaison de signaux de la sous-unité mains libres (4, 5, 6, 7) ou des signaux de microphone de l'agencement de microphones (9), le signal d'entrée pour l'installation de communication d'habitacle (8).

10. Installation de communication pour véhicules automobiles selon la revendication 9, dans laquelle chaque étage de génération de signal (21) pour le signal d'entrée de l'installation de communication d'habitacle (8) présente un étage de lissage adaptif (22) dans lequel il est possible de faire entrer le signal de sortie de l'étage de sélection de signaux (19) de la sous-unité mains libres (4, 5, 6, 7) ou un signal de microphone sélectionné en fonction des résultats du traitement réalisé dans l'étage de sélection de signaux (19).

11. Installation de communication pour véhicules automobiles selon la revendication 10, dans laquelle chaque étage de génération de signal (21) pour le signal d'entrée de l'installation de communication d'habitacle (8) présente un étage de détermination de facteur d'atténuation (23) au moyen duquel, en fonction d'un signal de référence et d'informations CAN, il est possible de générer des facteurs d'atténuation avec lesquels le signal de sortie de l'étage de lissage adaptif (22) peut être atténué.

12. Installation de communication pour véhicules automobiles selon l'une des revendications 1 à 11, dans laquelle l'unité centrale (3) du kit mains libres multiposte (3, 4, 5, 6, 7) présente, dans son trajet d'émission, un banc de filtres d'analyse (24) dans lequel les signaux de sortie des sous-unités mains libres (4, 5, 6, 7) sont traités dans une plage de sous-bandes ou fréquences, un étage de mélange adaptif (25) dans lequel les signaux de sortie du banc de filtres d'analyse (24) sont adaptables concernant leur puissance et des composantes de signaux vocaux souhaitées sont superposables de manière constructive, un étage de traitement ultérieur (26) dans lequel le signal de sortie de l'étage de mélange adaptif (25) peut être optimisé concernant la qualité vocale, l'intelligibilité vocale et le taux de perception, et un banc de filtres de synthèse (27) dans lequel les signaux de sortie réalisés en tant que signaux de sous-bande de l'étage de traitement ultérieur (26) peuvent être combinés en un signal de bande complète pour la génération du signal de sortie du banc de filtres de synthèse (27) ou de l'unité centrale (3).

13. Installation de communication pour véhicules automobiles selon l'une des revendications 1 à 12, dans laquelle l'unité centrale (3) du kit mains libres multiposte (3, 4, 5, 6, 7) présente, dans son trajet de réception, un banc de filtres d'analyse (28) dans lequel un signal d'entrée peut être traité dans une plage de sous-bandes ou fréquences, un étage d'élargissement de largeur de bande (29) dans lequel il est possible d'élargir la largeur de bande du signal de sortie du banc de filtres d'analyse (28) au moyen d'une estimation et re-synthétisation de plages de fréquences manquantes, un étage de régulation de volume sonore (30) au moyen duquel il est possible de réguler la retransmission de haut-parleur en fonction d'un niveau de bruit, et un banc de filtres de synthèse (31) au moyen duquel il est possible de générer le signal de sortie de l'unité centrale (3) retransmis à un amplificateur (13) ou à l'agencement de haut-parleurs (12) associé de manière conforme au passager de véhicule faisant l'objet de l'appel téléphonique.
